# FASCICULE DE BREVET EUROPEEN

(11) **EP 3 946 789 B1**
(45) Date de publication et mention de la délivrance du brevet: **03.09.2025**
(21) Numéro de dépôt: 20723916.1
(22) Date de dépôt: 02.04.2020
(51) Int. Cl.: B23D 43/02, B23D 37/06

(54) **OUTIL DE BROCHAGE, MACHINE DE BROCHAGE COMPORTANT UN TEL OUTIL ET PROCÉDÉ D'USINAGE D'UNE PIÈCE AU MOYEN D'UNE TELLE MACHINE**
RÄUMWERKZEUG, RÄUMMASCHINE MIT SOLCH EINEM WERKZEUG UND VERFAHREN ZUR BEARBEITUNG EINES WERKSTÜCKS MITTELS SOLCH EINER MASCHINE
BROACHING TOOL, BROACHING MACHINE COMPRISING SUCH A TOOL AND METHOD FOR MACHINING A WORKPIECE USING SUCH A MACHINE

(30) Priorité: 03.04.2019 FR 1903571
(43) Date de publication de la demande: 09.02.2022
(73) Titulaire: SAFRAN AIRCRAFT ENGINES, 75015 Paris (FR)
(72) Inventeur: CHOMIENNE, Vincent, 77550 MOISSY-CRAMAYEL (FR); RANCIC, Mickael, 77550 MOISSY-CRAMAYEL (FR)
(74) Mandataire: Gevers & Orès
(86) Numéro de dépôt international: PCT/FR2020/000081
(87) Numéro de publication internationale: WO 2020/201641

(56) Documents cités:
- JP-B1- S 491 515
- JP-U- S 598 718
- JP-U- S5 145 693
- US-A- 3 641 642
- US-A- 5 820 320

## Description

### Domaine technique de l'invention

L'invention se rapporte au domaine des outils et machines de brochage, notamment pour des pièces de l'industrie aéronautique. L'invention concerne également un procédé de brochage d'une pièce au moyen de l'outil et de la machine de brochage.

### Arrière-plan technique

De façon connue, dans l'industrie aéronautique, certaines pièces métalliques sont réalisées au moyen d'une technique d'usinage par enlèvement de copeaux, par exemple par brochage.

L'état de la technique comporte notamment les documents JP-B1-S49 1515, JP-US5145693, US-A-3 641 642, US-A-5 820 320, US-A1-2002/012573, JP-U-S59 8718 et JP-A-2015 066671.

Le brochage est principalement utilisé pour l'obtention d'alvéoles, notamment en forme de queue-d'aronde ou en forme de pied de sapin. En particulier, l'obtention d'alvéoles, qui sont des formes complexes, nécessite l'utilisation d'une succession de broches, chaque broche réalisant un enlèvement de matière d'une zone particulière de l'alvéole. Le brochage peut également être utilisé pour l'obtention de cannelures ou de formes complexes et linéaires.

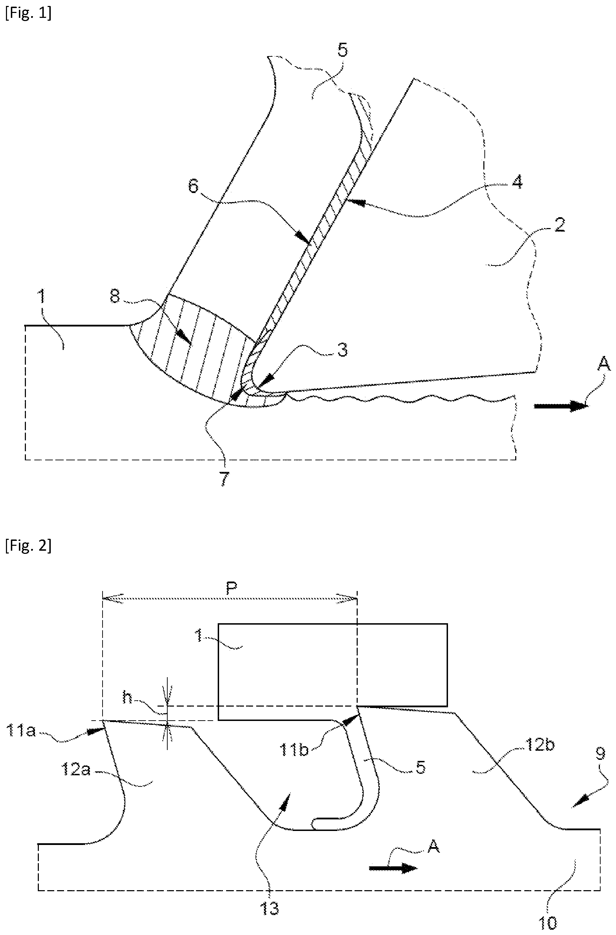

La figure 1 illustre le principe de l'usinage par enlèvement de copeaux, qui est d'enlever à l'aide d'un outil de la matière à une pièce brute, sous forme de copeaux, de façon à donner à la pièce brute la forme et les dimensions souhaitées. Sur cette figure, une pièce 1 métallique est usinée par enlèvement de copeaux, au moyen d'un outil 2 qui comporte un bec 3 et une interface 4 qui est en contact avec un copeau 5 qui est destiné à être retiré de la pièce 1.

Le phénomène physique principal se déroulant lors de l'usinage conventionnel par enlèvement de copeaux est une déformation plastique intense, c'est-à-dire une déformation irréversible, au niveau du bec 3 de l'outil 2. Cette déformation intense est générée lors de la mise en contact de l'outil 2, qui est dur, avec la pièce 1, qui est moins dure que l'outil 2, couplée avec la réalisation d'un mouvement relatif entre ces deux éléments. Par exemple, sur la figure 1, la flèche A illustre le mouvement de translation de l'outil 2 par rapport à la pièce 1.

Au niveau du bec 3 de l'outil 2, des contraintes thermomécaniques intenses sont générées dans la matière de la pièce 1 et sur l'outil 2, et notamment dans les zones 6 et 7 d'intenses contraintes thermomécaniques. Le fort écrouissage de la matière et les effets thermique en résultant, c'est-à-dire le phénomène d'adoucissement thermique, va permettre de cisailler la pièce, notamment au niveau d'une zone 8 de cisaillement, et donc de créer un copeau 5. Ce copeau 5, qui est issu de la pièce 1, se détache alors de la pièce 1 et frotte intensément sur la face de coupe de l'outil 2, c'est-à-dire sur l'interface 4 outil-copeau, ce qui induit une génération de chaleur. Ainsi, de fortes contraintes thermomécaniques sont induites par le copeau 5 sur l'outil 2, et inversement.

L'ordre de grandeur des contraintes mécaniques à l'interface 4 outil-copeau et au niveau du bec 3 de l'outil 2 est le giga Pascal et les températures pouvant être atteintes localement sont de l'ordre 1000° C pour les matériaux aéronautiques à faible conductivité, tels que des alliages à base de titane et des alliages à base de nickel. Lorsqu'elles sont trop fortes, ces contraintes thermomécaniques induisent des endommagements graves de l'outil tels que des écaillages ou des bris d'outil.

Une technique d'usinage conventionnelle par enlèvement de copeaux à l'aide d'arêtes multiples est le brochage. L'outil permettant d'enlever de la matière à la pièce brute, appelé un outil de brochage, est constitué de plusieurs éléments, appelés broches.

La figure 2 représente le principe d'une opération de brochage. Sur cette figure, une pièce 1 métallique est usinée au moyen d'un outil de brochage 9.

Chaque outil de brochage 9 comprend, sur un même corps 10, une succession de faces coupantes 11a, 11b distantes les unes des autres d'une valeur prédéterminée P, appelée pas, et étagées d'une autre valeur prédéterminée h, dite de progression à la dent, qui correspond pour chacune des faces 11a, 11b coupantes à la quantité de matière enlevée sur la pièce 1 usinée. Deux broches 12a, 12b successives sont séparées par une cavité 13, appelée chambre à copeaux. La chambre à copeau 13 est l'endroit où le copeau 5 obtenu vient s'enrouler et se loger avant son éjection dès la fin de prise de matière. Les premières broches qui rencontrent la pièce 1 à usiner par brochage, dites « broches d'ébauche droite », réalisent l'ébauche de la forme à usiner à l'aide d'arêtes de coupe rectilignes. Puis, des deuxièmes broches, dites « broches d'ébauche forme », réalisent la semi-finition de la forme à usiner à l'aide d'arêtes de coupe de forme quelconque, permettant ainsi d'approcher du profil final de la forme à usiner. Enfin, des troisièmes broches, dites « de finition de forme », réalisent la finition de la forme à brocher à l'aide d'arêtes de coupe de forme quelconque. En général, l'outil 2 est fixe sur un bâti d'une machine de brochage et la pièce 1 a un mouvement de translation linéaire, représenté par la flèche A.

L'opération de brochage peut être réalisée sous lubrification. En général, l'huile utilisée pour la lubrification est une huile entière. L'apport du lubrifiant lors des opérations de brochage s'effectue uniquement par l'extérieur de l'outil de brochage. Ainsi, lorsqu'une ou plusieurs dents 12a, 12b sont engagées dans la pièce 1 usinée, le lubrifiant ne peut que très difficilement, voire pas du tout, parvenir dans la zone de coupe, c'est-à-dire dans la zone de contact entre la pièce 1 et l'outil 2. Ceci conduit à une augmentation des efforts de coupe pouvant dégrader l'outil, notamment par écaillage ou bris d'outil, ce qui est encore plus important avec l'augmentation des vitesses de coupe qui conduisent à une élévation de la température vue par l'outil.

De même dans le cadre d'une progression à la dent h importante, ou lors de l'utilisation d'un outil 2 réalisant une grande partie de la forme en finition, par exemple un élément de finition usinant une forme complexe, la formation d'un copeau 5 et sa fragmentation est complexe. Ceci conduit à la génération d'efforts très importants, et, par voie de conséquence, des endommagements importants des arêtes 11a, 11b de coupe, notamment par écaillage ou bris d'outil, pouvant avoir des impacts majeurs sur la pièce 1 usinée.

Un premier impact est un impact géométrique. En effet, la rupture, ou l'écaillage, d'une dent a pour conséquence que cette dent ne peut pas réaliser la forme pour laquelle elle a été conçue. Les caractéristiques géométriques de la forme à usiner, telles que des cannelures, ou des alvéoles, ne vont pas être respectées.

Le second impact est un impact qui concerne l'intégrité matière. En effet, l'incrustation d'un bris d'outil sur la surface d'une pièce est un site préférentiel pour l'amorçage d'une fissure en fatigue, entre autres, menant à une réduction significative de la durée de vie de la pièce. Les écaillages d'arêtes coupantes induisent des anomalies de matière dont la sévérité peut également être préjudiciable pour la durée de vie de la pièce.

Dans le domaine de l'aéronautique, la vérification visuelle des dents de chaque élément d'une broche est une bonne pratique après chaque opération de brochage. L'endommagement important d'une dent sur un élément conduit aussi bien à l'achat d'un nouvel élément coûteux et long à fabriquer, qu'au potentiel rebut de la pièce.

JP-B1-S49 1515 divulgue un outil de brochage comprenant des canaux de lubrification s'étendant entre un orifice d'entrée pour une alimentation en lubrifiant et un orifice de sortie débouchant dans une cavité, chaque canal étant associé à une cavité.

L'invention a pour objectif de proposer une solution permettant de remédier à au moins certains de ces inconvénients.

En particulier, la présente invention propose une solution permettant de prévenir ces risques d'endommagement de l'outil de brochage grâce à l'apport de lubrifiant sous haute pression au plus près de la zone de coupe.

### Résumé de l'invention

À cet effet, l'invention concerne un outil de brochage, comprenant :
- au moins une zone de coupe comportant une face de coupe destinée à entrer en contact avec une pièce de manière à retirer de la matière, sous la forme d'au moins un copeau, de ladite pièce,
- au moins une cavité correspondant à ladite zone de coupe, ladite cavité étant agencée de manière à recevoir ledit au moins un copeau,
- une pluralité de canaux de lubrification associés à la ou chaque cavité et destinés à être alimentés en lubrifiant, chaque canal de lubrification ayant un orifice d'entrée agencé pour recevoir le lubrifiant et au moins un orifice de sortie débouchant dans ladite cavité, et
caractérisé en ce que la distance entre les orifices de sortie de deux canaux de lubrification consécutifs de la pluralité de canaux de lubrification augmente en s'éloignant de la face de coupe.

Avantageusement, l'outil de brochage selon l'invention permet une lubrification au niveau de la zone de coupe, ce qui permet de prévenir ces risques d'endommagement de l'outil de brochage.

En effet, la réalisation de canaux de lubrification internes dans l'outil de brochage permettent d'acheminer un lubrifiant liquide, quel qu'en soit sa nature, par exemple de l'huile entière, ou sous forme d'émulsion, au niveau de la cavité, qui est appelée chambre à copeau.

La cavité est équipée de plusieurs orifices de sortie permettant la sortie du lubrifiant, dirigé de manière à lubrifier la zone de coupe et la face de coupe de manière optimale. L'outil de brochage peut comprendre jusqu'à trente canaux de lubrification ayant un orifice de sortie débouchant dans une cavité.

Les orifices de sortie de la pluralité de canaux de lubrification sont répartis sur la surface de la cavité.

La distance entre les orifices de sortie de deux canaux de lubrification consécutifs de la pluralité de canaux de lubrification augmente en s'éloignant de la face de coupe.

Avantageusement, ceci permet d'optimiser la lubrification de la zone de coupe.

La face de coupe s'étend selon un premier axe, et au moins un canal de lubrification peut s'étendre selon un deuxième axe qui est différent du premier axe. Autrement dit, les canaux de lubrification peuvent être inclinés par rapport à la face de coupe.

En particulier, un angle solide compris entre 0° et 90° peut s'étendre entre le premier axe et le deuxième axe. De préférence, l'angle solide entre le premier axe et le deuxième axe peut être compris entre 0° et 60°.

Avantageusement, ceci permet une optimisation de la lubrification de la zone de coupe.

Les orifices de sortie de la pluralité de canaux de lubrification peuvent être alignés.

De même, les orifices d'entrée de la pluralité de canaux de lubrification peuvent être alignés selon un troisième axe, qui est différent du premier axe.

Avantageusement, ceci permet de rendre plus facile la lubrification de l'outil de brochage. En effet, comme les orifices d'entrée sont alignés, il n'y a pas besoin d'adapter le placement de l'outil de brochage pour l'alimentation en lubrifiant de chaque orifice d'entrée.

Le nombre d'orifices de sortie, la position des canaux de lubrification, ainsi que leur inclinaison est fonction des dimensions et de la forme de la face de coupe.

Un canal de lubrification peut être rectiligne et s'étendre selon un axe. En alternative, un canal de lubrification peut présenter une forme de coude, et comprendre au moins deux portions rectilignes s'étendant selon des axes différents.

Un canal de lubrification peut comporter un orifice d'entrée agencé pour recevoir le lubrifiant et une pluralité d'orifices de sortie, chaque orifice de sortie débouchant dans la cavité.

La section des orifices d'entrée et de sortie d'un canal de lubrification peut être de forme circulaire, ovale, polygonale, ou quelconque.

La section du canal de lubrification peut être de forme circulaire, ovale, polygonale, ou quelconque.

L'outil de brochage peut comprendre une pluralité de zones de coupe, chaque zone de coupe comportant une face de coupe destinée à entrer en contact avec une pièce de manière à retirer de la matière de ladite pièce, et une pluralité de cavités destinées à recevoir ladite matière, une cavité étant agencée entre deux zones de coupe successives. Dans chaque cavité peut déboucher les orifices de sortie des canaux de lubrification destinés à être alimentés en lubrifiant, chaque canal de lubrification ayant un orifice d'entrée agencé pour recevoir le lubrifiant.

L'outil de brochage selon l'invention peut être réalisé par métallurgie des poudres, par exemple par frittage.

Pour un outil de brochage usiné dans la masse, les canaux de lubrification de l'outil de brochage peuvent être réalisés par enfonçage par électroérosion.

L'invention concerne également une machine de brochage caractérisée en ce qu'elle comprend :
- un outil de brochage selon l'invention, et
- un système de lubrification comportant un réservoir de lubrifiant et des moyens de lubrification configurés pour acheminer le lubrifiant dudit réservoir aux orifice de sortie des canaux de lubrification sous haute pression.

De façon avantageuse, le système de lubrification permet l'alimentation d'au moins un canal de lubrification afin d'acheminer le lubrifiant au plus près de la zone de coupe d'un outil de brochage au cours du brochage.

De plus, l'assistance haute pression permet une sécurisation de l'opération de brochage et une réduction de la taille des éléments de l'outil de brochage, ainsi qu'une réduction des coûts associés.

Le système de lubrification permet d'assurer un débit et une pression suffisante pour transférer le lubrifiant du réservoir jusqu'à l'outil de brochage. En particulier, le système de lubrification est capable d'acheminer le lubrifiant sous haute pression jusqu'aux orifices de sortie situés dans la cavité.

Cette lubrification permet d'induire une forte contrainte sur la matière retirée de la pièce, c'est-à-dire sur un copeau, à proximité de la face de coupe, ce qui provoque une flexion plus importante du copeau. Cette contrainte mécanique supplémentaire sur le copeau favorise sa fragmentation, c'est-à-dire que le copeau sera plus petit qu'un copeau généré avec une lubrification conventionnelle, comme pour les outils de brochage selon l'art antérieur.

De plus, la fragmentation des copeaux, et ainsi la réduction de leur taille, permet de minimiser les dimensions des cavités, c'est-à-dire des chambres copeaux, ce qui rend l'outil de brochage plus robuste. En outre, les risques de coincement de gros copeaux dans les chambres à copeaux conduisant à des endommagements de l'outil de brochage ou de la pièce sont réduits. Cette diminution de la taille de la chambre à copeaux et donc du pas P entre deux zones de coupe induit une diminution de la taille des éléments de l'outil de brochage. Cette réduction de la longueur de l'outil de brochage contribue à une diminution du temps d'usinage et du coût de fabrication de l'outil de brochage.

De plus, comme les frottements augmentent la température de l'outil de brochage, ce qui contribue à l'accélération de son usure, il est important de réduire au maximum leurs effets. L'apport de lubrification haute pression à l'interface entre le copeau et l'outil de brochage permet de réduire la surface de frottement, en favorisant le recourbement du copeau. La diminution de la surface de frottement conduit à une réduction de la quantité de chaleur générée sur l'outil de brochage, et donc à une augmentation de sa durée de vie.

Le système de lubrification permet d'acheminer le lubrifiant sous haute pression, c'est-à-dire sous une pression comprise entre 10 et 300 bars.

La machine de brochage peut également comporter un bâti.

L'outil de brochage peut être mobile en translation par rapport au bâti. La pièce peut être fixe en translation par rapport au bâti. Le système de lubrification peut être fixe en translation par rapport au bâti.

En variante, l'outil de brochage peut être fixe en translation par rapport au bâti, et la pièce et le système de lubrification peuvent être mobiles en translation par rapport au bâti.

Autrement dit, l'un parmi l'outil de brochage et la pièce est mobile en translation par rapport au bâti, l'autre parmi l'outil de brochage et la pièce est fixe en translation par rapport au bâti, et le système de lubrification est fixe en translation par rapport à la pièce. Ainsi, l'outil de brochage et la pièce sont en mouvement de translation relatif l'un par rapport à l'autre.

Les moyens de lubrification peuvent comporter un distributeur de lubrification configuré pour alimenter en lubrifiant sous haute pression les canaux de lubrification d'au moins une ou de chaque cavité correspondant à une zone de coupe dont une face de coupe entre en contact avec la pièce.

Au cours du brochage, le distributeur de lubrification permet l'alimentation sélective d'au moins un canal de lubrification afin d'acheminer le lubrifiant au plus près de la zone de coupe d'un outil de brochage.

L'interface entre le système de lubrification et l'outil de brochage permet ainsi d'alimenter en lubrifiant uniquement les canaux de lubrification situés au niveau des cavités en regard des faces de coupe engagées ou sur le point de s'engager dans la matière de la pièce. En effet, le distributeur de lubrification permet d'alimenter uniquement les canaux de lubrification en regard des faces de coupe engagées ou sur le point de s'engager dans la matière de la pièce.

Le distributeur de lubrification, qui est fixe par rapport à la pièce à brocher, permet d'alimenter les canaux de lubrification des différentes cavités de l'outil de brochage lorsque les cavités arrivent à son niveau, au moment de s'engager dans la pièce. La dimension du distributeur de lubrification permet de cesser l'alimentation des canaux de lubrification dès lors que la cavité concernée n'est plus dans la pièce. Ce distributeur de lubrification est propre à chaque épaisseur de pièce à brocher de manière à alimenter uniquement les canaux de lubrification nécessaires.

Le distributeur de lubrification peut comporter au moins un joint d'étanchéité.

Avantageusement, le joint d'étanchéité solidaire du distributeur de lubrification permet d'assurer l'étanchéité de l'interface avec l'outil de brochage.

L'invention concerne également un procédé d'usinage d'une pièce au moyen d'une machine de brochage selon l'invention, la machine de brochage comportant un bâti, le procédé comprenant les étapes consistant en :
- un déplacement en translation de l'un parmi l'outil de brochage et la pièce par rapport au bâti de manière à ce qu'au moins une face de coupe entre en contact avec la pièce, l'autre parmi l'outil de brochage et la pièce étant fixe par rapport au bâti,
- une lubrification de la au moins une cavité correspondant à la zone de coupe pour laquelle la face de coupe entre en contact avec la pièce, au moyen du système de lubrification qui est fixe par rapport à la pièce, et
- un arrêt de la lubrification de la au moins une cavité correspondant à ladite zone de coupe dès que la face de coupe cesse d'être en contact avec la pièce.

Avantageusement, ce procédé permet une lubrification sélective des cavités de l'outil de brochage.

La lubrification peut être réalisée au moyen d'un lubrifiant liquide, telle qu'une huile entière, ou qu'une émulsion.

### Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1] la figure 1 est une vue en coupe du principe de l'usinage par enlèvement de copeaux ;
[Fig. 2] la figure 2 est une vue en coupe du principe d'une opération de brochage ;
[Fig. 3] la figure 3 est une vue en perspective d'un outil de brochage non couvert par le texte des revendications ;
[Fig. 4] la figure 4 est une vue en coupe d'un outil de brochage selon l'invention ;
[Fig. 5] la figure 5 est une vue en coupe d'une machine de brochage ;
[Fig. 6] la figure 6 est une vue en coupe de la machine de brochage de la figure 5 ; et
[Fig. 7] la figure 7 représente une vue agrandie de l'encadré B de la figure 6.

Les éléments ayant les mêmes fonctions dans les différentes mises en œuvre ont les mêmes références dans les figures.

### Description détaillée de l'invention

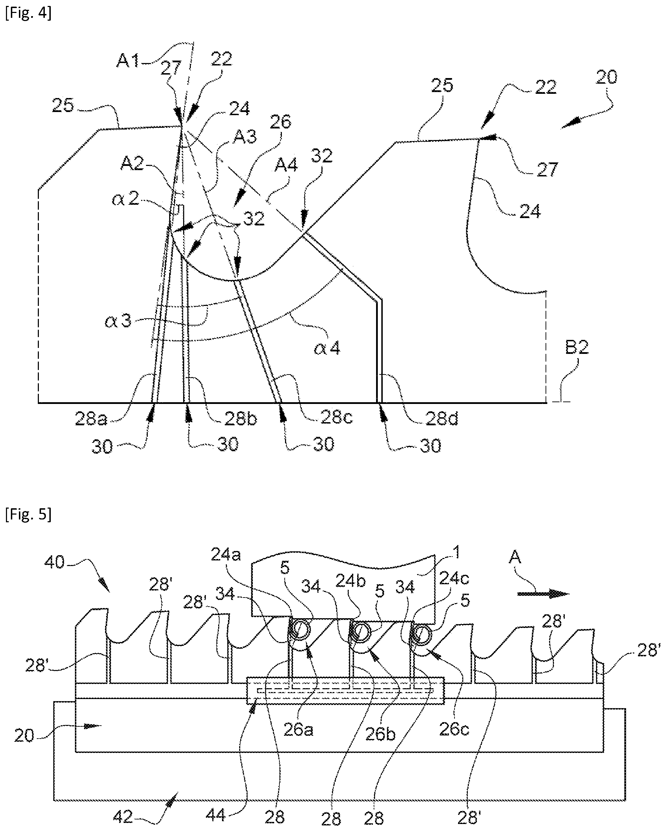

La figure 4 représente un outil de brochage 20 selon l'invention.

L'outil de brochage 20 comporte une pluralité de zones de coupe 22. Chaque zone de coupe 22 comporte une face de coupe 24 destinée à entrer en contact avec une pièce à brocher de manière à retirer de la matière, sous forme d'au moins un copeau, de la pièce. La face de coupe 24 est une surface de la zone de coupe 22, entre une zone de dépouille 25, également appelée face de dépouille, et une cavité 26. Une face de coupe 24 peut être une surface d'une forme quelconque, ou une surface plane comme sur la figure 4.

De même, une face de dépouille 25 peut être une surface d'une forme quelconque, ou une surface plane comme sur la figure 4.

Une arête de coupe 27 est définie comme une intersection entre une face de coupe 24 et une zone de dépouille 25.

Sur la figure 4, les faces de coupe 24 ne sont pas étagées. Bien que non représenté, les faces de coupe 24 peuvent être étagées.

L'outil de brochage 20 comporte une pluralité de cavités 26, chaque cavité 26 correspondant à une zone de coupe 22. Une cavité 26 est agencée de manière à recevoir la matière qu'une face de coupe 24a retiré de la pièce à brocher. Ainsi, une cavité est associée à une face de coupe 24, et donc à une zone de coupe 22. Une cavité est agencée entre deux zones de coupe 22 consécutives. Selon une vue en coupe, par exemple telle que représentée sur la figure 4, une cavité 26 présente une forme générale de « U ». Bien entendu, la cavité peut présenter toute autre forme de section, par exemple en forme générale de « V » ou une forme quelconque.

L'outil de brochage 20 comporte également une pluralité de canaux de lubrification 28, destinés à être alimentés en lubrifiant, chaque canal de lubrification 28 ayant un orifice d'entrée 30 agencé pour recevoir du lubrifiant et un orifice de sortie 32 débouchant dans une cavité 26.

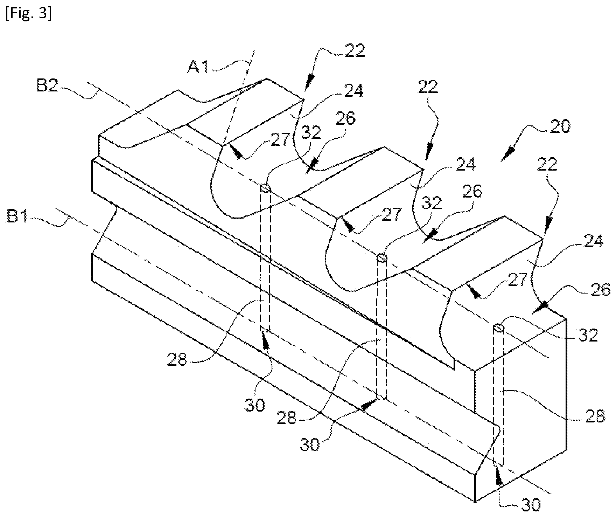

Sur la figure 3, il y a un canal de lubrification 28 par cavité 26. Toutefois, selon l'invention, l'outil de brochage 20 comprend une pluralité de canaux de lubrification 28 par cavité 26. En particulier, l'outil de brochage 20 peut comprendre entre jusqu'à trente canaux de lubrification 28 par cavité 26. Sur la figure 4, il y a quatre canaux de lubrification 28a, 28b, 28c, 28d pour la cavité 26.

Bien que non représenté, un canal de lubrification 28 peut comporter un seul orifice d'entrée 30 et une pluralité d'orifices de sortie 32, chaque orifice de sortie 32 débouchant dans une cavité 26. Autrement dit, un canal de lubrification 28 peut se diviser en sous-canaux de lubrification, chaque sous-canal de lubrification ayant un orifice de sortie 32 débouchant dans une cavité 26.

Comme représenté sur la figure 4, les orifices de sortie 32 des canaux de lubrification 28 sont répartis sur la surface d'une cavité 26.

Selon l'invention, la distance entre les orifices de sortie 32 de deux canaux de lubrification 28 consécutifs augmente en s'éloignant de la face de coupe 24, comme représenté sur la figure 4. En effet, la distance entre l'orifice 32 du canal de lubrification 28a et l'orifice 32 du canal de lubrification 28b est inférieure à la distance entre l'orifice 32 du canal de lubrification 28b et l'orifice 32 du canal de lubrification 28c. De même, la distance entre l'orifice 32 du canal de lubrification 28c et l'orifice 32 du canal de lubrification 28d est supérieure à la distance entre l'orifice 32 du canal de lubrification 28b et l'orifice 32 du canal de lubrification 28c. Ainsi, l'espacement entre deux orifices de sortie 32 de deux canaux de lubrification 28 consécutif diminue en se rapprochant de la face de coupe 24.

La distance entre les orifices d'entrée 30 des canaux de lubrification 28 peut être identique. En alternative, la distance entre les orifices d'entrée 30 des canaux de lubrification 28 consécutifs peut varier.

La face de coupe 24 s'étend selon un axe, noté A1 sur la figure 4. Au moins un canal de lubrification 28 peut s'étendre selon un autre axe, qui est différent de l'axe A1. Comme représenté sur la figure 4, dans le plan (A1, B2), le canal de lubrification 28a s'étend sensiblement selon l'axe A1, le canal de lubrification 28b s'étend selon un axe A2 qui forme un angle α2 avec l'axe A1, le canal de lubrification 28c s'étend selon un axe A3 qui forme un angle α3 avec l'axe A1, et le canal de lubrification 28d s'étend selon un axe A4 qui forme un angle α4 avec l'axe A1. Dans le plan (A1, B2), les angles α1, α2 et α3 peuvent être compris entre 0° et 90°, et de préférence entre 0° et 60°.

Les canaux de lubrification peuvent s'étendre selon des axes non compris dans le plan (A1, B2), par exemple dans un plan défini par un axe parallèle à l'axe A1 et un axe parallèle à l'axe B2, et définir des angles solides dans ces plans. Les angles solides α1, α2 et α3 peuvent être compris entre 0° et 90°. De préférence, les angles solides α1, α2 et α3 sont compris entre 0° et 60°.

Comme représenté sur la figure 3, les orifices d'entrée 30 des canaux de lubrification 28 peuvent être alignés. Par exemple, les orifices d'entrée 30 peuvent être alignés dans la direction d'élongation de l'outil de brochage 20, représentée par l'axe B1 sur la figure 3.

De même, les orifices de sortie 32 des canaux de lubrification 28 peuvent être alignés. Par exemple, les orifices de sortie 32 peuvent être alignés dans la direction d'élongation de l'outil de brochage 20, représentée par l'axe B2 sur la figure 3.

Un canal de lubrification 28 peut être rectiligne et s'étendre selon un axe. Par exemple, les canaux de lubrification 28a, 28b et 28c sont rectilignes et s'étendent respectivement selon les axes A1, A2 et A3.

En alternative, un canal de lubrification 28 peut présenter une forme de coude et comprendre des portions rectilignes. Par exemple, le canal de lubrification 28d présente une forme de coude, et comprend deux portions rectilignes, la deuxième portion rectiligne s'étendant selon l'axe A4.

La longueur d'un canal de lubrification 28, c'est-à-dire la dimension longitudinale d'un canal de lubrification, peut être différente de la longueur d'un autre canal de lubrification 28. Par exemple, sur la figure 4, les canaux de lubrification 28a, 28b, 28c, 28d ont des longueurs différentes. Ces différences de longueur des canaux de lubrification induisent des différences de hauteur des orifices de sortie 32. Ainsi, les orifices de sortie 32 peuvent ne pas être alignés selon un axe orthogonal à la direction d'élongation de l'outil de brochage 20.

La section d'un canal de lubrification 28 peut être de forme circulaire, ovale, polygonale, ou quelconque.

La section d'un orifice d'entrée 30 d'un canal de lubrification 28 peut être de forme circulaire, telle que représentée sur la figure 3, ou ovale, ou polygonale, ou quelconque. De même, la section d'un orifice de sortie 32 d'un canal de lubrification 28 peut être de forme circulaire, comme sur la figure 3, ou ovale, ou polygonale, ou quelconque.

En particulier, le nombre d'orifices de sortie 32, la position des canaux de lubrification 28 sur la cavité 26, ainsi que leur inclinaison par rapport à l'axe A1 de l'arête de coupe 24 dépend des dimensions et de la forme de l'arête de coupe 24.

Les figures 5 à 7 représentent une machine de brochage selon l'invention, dans laquelle seul un canal de lubrification par cavité est représenté pour des raisons de clarté.

La machine de brochage 40 comprend un bâti. La pièce 1 à brocher peut être agencée fixe par rapport au bâti. En variante, la pièce à brocher peut être agencée mobile en translation par rapport au bâti.

La machine de brochage 40 comprend également l'outil de brochage 20, qui peut être agencé mobile en translation par rapport au bâti, le mouvement de translation de l'outil de brochage 20 étant représenté par la flèche A. L'outil de brochage 20 peut être agencé sur un coulisseau 42, qui est mobile en translation par rapport au bâti. En variante, l'outil de brochage 20 peut être fixe par rapport au bâti.

La machine de brochage 40 comprend également un système de lubrification 41, qui est fixe en translation par rapport à la pièce. Le système de lubrification 41 comporte un réservoir 43 de lubrifiant et des moyens de lubrification 45 configurés pour acheminer le lubrifiant du réservoir 43 à au moins un orifice de sortie 32 d'un canal de lubrification 28 sous haute pression. Le système de lubrification 41 permet d'acheminer le lubrifiant sous une pression comprise entre 10 et 300 bars.

Les moyens de lubrification 45 peuvent comporter un distributeur de lubrification 44 configuré pour alimenter en lubrifiant sous haute pression le ou chaque canal de lubrification 28 d'une ou de chaque cavité 26 correspondant à une zone de coupe 22 dont une arête de coupe 24 entre en contact avec la pièce 1. En particulier, le distributeur de lubrification 44 alimente en lubrifiant uniquement les canaux de lubrification 28 des cavités 26 correspondant aux zones de coupe 22 dont les arêtes de coupe 24 sont en contact avec la pièce 1, ou sont sur le point d'entrer en contact avec la pièce 1. Autrement dit, le distributeur de lubrification 44 n'alimente en lubrifiant que les canaux de lubrification 28 pour lesquels les cavités 26 correspondent aux arêtes de coupe 24 engagées ou sur le point de s'engager dans la pièce 1. Par exemple, sur la figure 5, trois arêtes de coupe 24a, 24b, 24c sont en contact avec la pièce 1 de manière à former un copeau 5, les cavités 26a, 26b, 26c correspondantes sont alors lubrifiées au travers des canaux de lubrification 28'. La lubrification des zones de coupe est illustrée par les pointillés 34. Les canaux de lubrification 28 de la figure 5 ne sont pas alimentés en lubrifiant. Ainsi, l'alimentation des canaux de lubrification 28' cesse dès lors que l'arête de coupe 24 à laquelle correspond une cavité 26 n'est plus dans la pièce 1.

Ainsi, au cours du brochage, le distributeur de lubrification 44 permet l'alimentation sélective des canaux de lubrification 28, 28' afin d'acheminer le lubrifiant du réservoir 43 au niveau de la zone de coupe d'un outil de brochage 20.

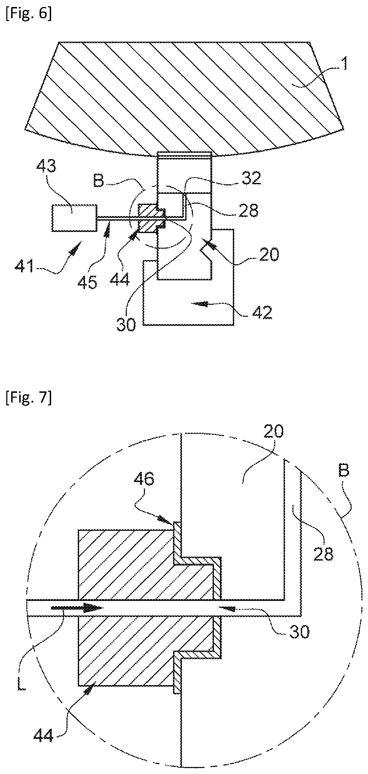

Le distributeur de lubrification 44 peut comporter un ou une pluralité de joints d'étanchéité 46 permettant d'assurer l'étanchéité de l'interface du distributeur de lubrification 44 avec l'outil de brochage 20. Sur les figures 6 et 7, un canal de lubrification 28, représenté en pointillés sur la figure 6, est alimenté en lubrifiant depuis le réservoir 43, la flèche L sur la figure 7 représentant l'alimentation en lubrifiant par le distributeur de lubrification 44.

L'invention concerne également un procédé d'usinage d'une pièce 1 au moyen d'une machine de brochage 40 telle que décrite précédemment comprenant un outil de brochage 20 selon l'invention. Ce procédé comprend une étape consistant en un déplacement en translation de l'un parmi l'outil de brochage 20 et la pièce 1 par rapport au bâti, l'autre parmi l'outil de brochage 20 et la pièce 1 étant fixe par rapport au bâti, de manière à ce qu'au moins une arête de coupe 24a, 24b, 24c entre en contact avec la pièce 1.

Le procédé comprend également une étape consistant en une lubrification de la ou de chaque cavité 26 correspondant à une zone de coupe pour laquelle l'arête de coupe 24a, 24b, 24c entre en contact avec la pièce 1, au moyen du système de lubrification 41.

Le procédé comprend également une étape consistant en un arrêt de la lubrification de la ou de chaque cavité correspondant à la zone de coupe dès que l'arête de coupe 24a, 24b, 24c cesse d'être en contact avec la pièce 1.

En particulier, la lubrification peut être réalisée au moyen d'un lubrifiant liquide, telle qu'une huile entière, ou qu'une émulsion.

Les dimensions du distributeur de lubrification 44 sont basées sur les dimensions de la pièce 1 à brocher, de sorte que la lubrification ne soit réalisée que pour les zones de coupe 22 dont les arêtes de coupe 24 sont en contact avec la pièce 1.

## Revendications

1. Outil de brochage (20), comprenant :
- au moins une zone de coupe (22) comportant une face de coupe (24 ; 24a, 24b, 24c) destinée à entrer en contact avec une pièce (1) de manière à retirer de la matière, sous la forme d'au moins un copeau (5), de ladite pièce (1),
- au moins une cavité (26 ; 26a, 26b, 26c) correspondant à ladite zone de coupe (22), ladite cavité (26 ; 26a, 26b, 26c) étant agencée de manière à recevoir ledit au moins un copeau,
- une pluralité de canaux de lubrification (28 ; 28a, 28b, 28c, 28d ; 28') associés à la ou chaque cavité et destinés à être alimentés en lubrifiant, chaque canal de lubrification (28 ; 28a, 28b, 28c, 28d ; 28') ayant un orifice d'entrée (30) agencé pour recevoir le lubrifiant et au moins un orifice de sortie (32) débouchant dans ladite cavité (26 ; 26a, 26b, 26c), et
**caractérisé en ce que** la distance entre les orifices de sortie (32) de deux canaux de lubrification (28 ; 28a, 28b, 28c, 28d ; 28') consécutifs de la pluralité de canaux de lubrification (28 ; 28a, 28b, 28c, 28d ; 28') augmente en s'éloignant de la face de coupe (24 ; 24a, 24b 24c).

2. Outil de brochage (20) selon la revendication précédente, dans lequel les canaux de lubrification (28 ; 28a, 28b, 28c, 28d ; 28') sont inclinés par rapport à la face de coupe (24 ; 24a, 24b, 24c).

3. Outil de brochage (20) selon l'une des revendications 1 ou 2, dans lequel les orifices d'entrée (30) sont alignés.

4. Outil de brochage (20) selon l'une des revendications précédentes, comprenant une pluralité de zones de coupe (22), chaque zone de coupe (22) comportant une face de coupe (24 ; 24a, 24b 24c) destinée à entrer en contact avec la pièce (1) de manière à retirer de la matière de ladite pièce (1), et une pluralité de cavité (26 ; 26a, 26b, 26c) destinées à recevoir ladite matière, une cavité (26 ; 26a, 26b, 26c) étant agencée entre deux zones de coupe (22) successives, et dans lequel, dans chaque cavité (26 ; 26a, 26b, 26c) débouche les orifices de sortie (32) des canaux de lubrification (28 ; 28a, 28b, 28c, 28d ; 28') destinés à être alimentés en lubrifiant, chaque canal de lubrification (28 ; 28a, 28b, 28c, 28d ; 28') ayant un orifice d'entrée (30) agencé pour recevoir le lubrifiant.

5. Machine de brochage (40) **caractérisée en ce qu'**elle comprend :
- un outil de brochage (20) selon l'une des revendications précédentes, et
- un système de lubrification (41) comportant un réservoir (43) de lubrifiant et des moyens de lubrification (45) configurés pour acheminer le lubrifiant dudit réservoir (43) aux orifices de sortie (32) des canaux de lubrification (28 ; 28a, 28b, 28c, 28d ; 28') sous haute pression comprise entre 10 et 300 bars.

6. Machine de brochage (40) selon la revendication précédente, comprenant l'outil de brochage (20) selon la revendication 4, la machine de brochage (40) comportant également un bâti, l'outil de brochage (20) étant mobile en translation par rapport au bâti, le système de lubrification (41) étant fixe en translation par rapport au bâti, et dans laquelle les moyens de lubrification (45) comportent un distributeur de lubrification (44) configuré pour alimenter en lubrifiant sous haute pression les canaux de lubrification (28') d'au moins une ou de chaque cavité (26a, 26b, 26c) correspondant à une zone de coupe (22) dont une face de coupe (24a, 24b 24c) entre en contact avec la pièce (1).

7. Machine de brochage (40) selon la revendication 5, comprenant l'outil de brochage (20) selon la revendication 4, la machine de brochage (40) comportant également un bâti, l'outil de brochage (20) étant fixe en translation par rapport au bâti, le système de lubrification (41) étant mobile en translation par rapport au bâti, et dans laquelle les moyens de lubrification (45) comportent un distributeur de lubrification (44) configuré pour alimenter en lubrifiant sous haute pression les canaux de lubrification (28') d'au moins une ou de chaque cavité (26a, 26b, 26c) correspondant à une zone de coupe (22) dont une face de coupe (24a, 24b 24c) entre en contact avec la pièce (1).

8. Machine de brochage (40) selon l'une des revendications 6 ou 7, dans laquelle le distributeur de lubrification (44) comporte au moins un joint d'étanchéité (46).

9. Procédé d'usinage d'une pièce (1) au moyen d'une machine de brochage (40) selon l'une des revendications 5 à 8, la machine de brochage (40) comportant un bâti, l'un parmi l'outil de brochage (20) et ladite pièce (1) étant fixe par rapport au bâti, le procédé comprenant les étapes consistant en :
- un déplacement en translation de l'autre parmi l'outil de brochage (20) et la pièce (1) par rapport au bâti de manière à ce que au moins une face de coupe (24a, 24b 24c) entre en contact avec la pièce (1),
- une lubrification, au moyen du système de lubrification (41), de la au moins une cavité (26a, 26b, 26c) correspondant à la zone de coupe (22) pour laquelle la face de coupe (24a, 24b 24c) entre en contact avec la pièce (1),
- un arrêt de la lubrification de la au moins une cavité (26a, 26b, 26c) correspondant à ladite zone de coupe dès que la face de coupe (24a, 24b 24c) cesse d'être en contact avec la pièce (1).

## Patentansprüche

1. Räumwerkzeug (20), umfassend:
- mindestens einen Schneidbereich (22), der eine Schneidseite (24; 24a, 24b, 24c) umfasst, die dazu bestimmt ist, mit einem Werkstück (1) in Kontakt zu kommen, um Material in Form von mindestens einem Span (5) von dem Werkstück (1) zu entfernen,
- mindestens einen Hohlraum (26; 26a, 26b, 26c), der dem Schneidbereich (22) entspricht, wobei der Hohlraum (26; 26a, 26b, 26c) so angeordnet ist, dass er den mindestens einen Span aufnimmt,
- eine Vielzahl von Schmierkanälen (28; 28a, 28b, 28c, 28d; 28'), die dem oder jedem Hohlraum zugeordnet und dazu bestimmt sind, mit Schmiermittel gespeist zu werden, wobei jeder Schmierkanal (28; 28a, 28b, 28c, 28d; 28') eine Einlassöffnung (30), die so angeordnet ist, dass sie das Schmiermittel aufnimmt, und mindestens eine Auslassöffnung (32) aufweist, die in den Hohlraum (26; 26a, 26b, 26c) mündet, und
**dadurch gekennzeichnet, dass** der Abstand zwischen den Auslassöffnungen (32) zweier aufeinanderfolgender Schmierkanäle (28; 28a, 28b, 28c, 28d; 28') der Vielzahl von Schmierkanälen (28; 28a, 28b, 28c, 28d; 28') mit zunehmender Entfernung von der Schneidseite (24; 24a, 24b, 24c) größer wird.

2. Räumwerkzeug (20) nach dem vorstehenden Anspruch, wobei die Schmierkanäle (28; 28a, 28b, 28c, 28d; 28') in Bezug auf die Schneidseite (24; 24a, 24b, 24c) geneigt sind.

3. Räumwerkzeug (20) nach einem der Ansprüche 1 oder 2, wobei die Einlassöffnungen (30) fluchten.

4. Räumwerkzeug (20) nach einem der vorstehenden Ansprüche, das eine Vielzahl von Schneidbereichen (22) umfasst, wobei jeder Schneidbereich (22) eine Schneidseite (24; 24a, 24b, 24c), die dazu bestimmt ist, mit dem Werkstück (1) in Kontakt zu kommen, um Material von dem Werkstück (1) zu entfernen, und eine Vielzahl von Hohlräumen (26; 26a, 26b, 26c) umfasst, die dazu bestimmt sind, das Material aufzunehmen, wobei ein Hohlraum (26; 26a, 26b, 26c) zwischen zwei aufeinanderfolgenden Schneidbereichen (22) angeordnet ist, und wobei in jeden Hohlraum (26; 26a, 26b, 26c) die Auslassöffnungen (32) der Schmierkanäle (28; 28a, 28b, 28c, 28d; 28') münden, die dazu bestimmt sind, mit Schmiermittel gespeist zu werden, wobei jeder Schmierkanal (28; 28a, 28b, 28c, 28d; 28') eine Einlassöffnung (30) aufweist, die so angeordnet ist, dass sie das Schmiermittel aufnimmt.

5. Räummaschine (40), **dadurch gekennzeichnet, dass** sie umfasst:
- ein Räumwerkzeug (20) nach einem der vorstehenden Ansprüche, und
- ein Schmiersystem (41), das einen Schmiermittelbehälter (43) und Schmiermittel (45) umfasst, die so konfiguriert sind, dass sie das Schmiermittel unter hohem Druck im Bereich zwischen 10 und 300 bar aus dem Behälter (43) zu den Auslassöffnungen (32) der Schmierkanäle (28; 28a, 28b, 28c, 28d; 28') leiten.

6. Räummaschine (40) nach dem vorstehenden Anspruch, die das Räumwerkzeug (20) nach Anspruch 4 umfasst, wobei die Räummaschine (40) ebenfalls ein Gestell umfasst, wobei das Räumwerkzeug (20) in Bezug auf das Gestell verschiebebeweglich ist, wobei das Schmiersystem (41) in Bezug auf das Gestell verschiebefest ist, und wobei die Schmiermittel (45) einen Schmierverteiler (44) umfassen, der so konfiguriert ist, dass er die Schmierkanäle (28') mindestens eines oder jedes Hohlraums (26a, 26b, 26c), der einem Schneidbereich (22) entspricht, von dem eine Schneidseite (24a, 24b, 24c) mit dem Werkstück (1) in Kontakt kommt, unter hohem Druck mit Schmiermittel speist.

7. Räummaschine (40) nach Anspruch 5, die das Räumwerkzeug (20) nach Anspruch 4 umfasst, wobei die Räummaschine (40) ebenfalls ein Gestell umfasst, wobei das Räumwerkzeug (20) in Bezug auf das Gestell verschiebefest ist, wobei das Schmiersystem (41) in Bezug auf das Gestell verschiebebeweglich ist, und wobei die Schmiermittel (45) einen Schmierverteiler (44) umfassen, der so konfiguriert ist, dass er die Schmierkanäle (28') mindestens eines oder jedes Hohlraums (26a, 26b, 26c), der einem Schneidbereich (22) entspricht, von dem eine Schneidseite (24a, 24b, 24c) mit dem Werkstück (1) in Kontakt kommt, unter hohem Druck mit Schmiermittel speist.

8. Räummaschine (40) nach einem der Ansprüche 6 oder 7, wobei der Schmierverteiler (44) mindestens eine Dichtung (46) umfasst.

9. Verfahren zum Bearbeiten eines Werkstücks (1) mittels einer Räummaschine (40) nach einem der Ansprüche 5 bis 8, wobei die Räummaschine (40) ein Gestell umfasst, wobei eines des Räumwerkzeugs (20) und des Werkstücks (1) in Bezug auf das Gestell feststehend ist, wobei das Verfahren die folgenden Schritte umfasst:
- eine Verschiebebewegung des anderen des Räumwerkzeugs (20) und des Werkstücks (1) in Bezug auf das Gestell, sodass mindestens eine Schneidseite (24a, 24b, 24c) mit dem Werkstück (1) in Kontakt kommt,
- eine Schmierung, mittels des Schmiersystems (41), des mindestens einen Hohlraums (26a, 26b, 26c), der dem Schneidbereich (22) entspricht, dessen Schneidseite (24a, 24b, 24c) mit dem Werkstück (1) in Kontakt kommt,
- ein Stoppen der Schmierung des mindestens einen Hohlraums (26a, 26b, 26c), der dem Schneidbereich entspricht, sobald sich die Schneidseite (24a, 24b, 24c) nicht mehr mit dem Werkstück (1) in Kontakt befindet.

## Claims

1. A broaching tool (20), comprising:
- at least one cutting area (22) comprising a cutting face (24; 24a, 24b, 24c) which is intended to come into contact with a workpiece (1) so as to remove material, in the shape of at least one chip (5), from said workpiece (1),
- at least one cavity (26; 26a, 26b, 26c) corresponding to said cutting area (22), said cavity (26; 26a, 26b, 26c) being arranged so as to receive said at least one chip,
- a plurality of lubrication channels (28; 28a, 28b, 28c, 28d; 28') associated with the or each cavity and intended to be supplied with lubricant, each lubrication channel (28; 28a, 28b, 28c, 28d; 28') having an inlet orifice (30) arranged to receive the lubricant and at least one outlet orifice (32) opening into said cavity (26; 26a, 26b, 26c), and
**characterized in that** the distance between the outlet orifices (32) of two consecutive lubrication channels (28; 28a, 28b, 28c, 28d; 28') of the plurality of lubrication channels (28; 28a, 28b, 28c, 28d; 28') increases by moving away from the cutting face (24; 24a, 24b, 24c).

2. The broaching tool (20) according to the preceding claim, wherein the lubrication channels (28; 28a, 28b, 28c, 28d; 28') are inclined relative to the cutting face (24; 24a, 24b, 24c).

3. The broaching tool (20) according to any of claims 1 or 2, wherein the inlet orifices (30) are aligned.

4. The broaching tool (20) according to one of the preceding claims, comprising a plurality of cutting areas (22), each cutting area (22) comprising a cutting face (24; 24a, 24b, 24c) intended to come into contact with the workpiece (1) so as to remove material from said workpiece (1), and a plurality of cavities (26; 26a, 26b, 26c) intended to receive said material, one cavity (26; 26a, 26b, 26c) being arranged between two successive cutting areas (22), and wherein, in each cavity (26; 26a, 26b, 26c) open out the outlet orifices (32) of the lubrication channels (28; 28a, 28b, 28c, 28d; 28') intended to be supplied with lubricant, each lubrication channel (28; 28a, 28b, 28c, 28d; 28') having an inlet orifice (30) arranged to receive the lubricant.

5. A broaching machine (40) **characterized in that** it comprises:
- a broaching tool (20) according to one of the preceding claims, and
- a lubrication system (41) comprising a lubricant tank (43) and lubrication means (45) configured to deliver the lubricant from said tank (43) to the outlet orifices (32) of the lubrication channels (28; 28a, 28b, 28c, 28d; 28') under high pressure between 10 and 300 bars.

6. The broaching machine (40) according to the preceding claim, comprising the broaching tool (20) according to claim 4, the broaching machine (40) also comprising a frame, the broaching tool (20) being mobile in translation relative to the frame, the lubrication system (41) being fixed in translation relative to the frame and in which the lubrication means (45) comprise a lubrication distributor (44) configured to supply lubricant under high pressure to the lubrication channels (28') of at least one or of each cavity (26a, 26b, 26c) corresponding to a cutting area (22), a cutting face (24a, 24b, 24c) of which comes into contact with the workpiece (1).

7. The broaching machine (40) according to claim 5, comprising the broaching tool (20) according to claim 4, the broaching machine (40) also comprising a frame, the broaching tool (20) being fixed in translation relative to the frame, the lubrication system (41) being mobile in translation relative to the frame and in which the lubrication means (45) comprise a lubrication distributor (44) configured to supply lubricant under high pressure to the lubrication channels (28') of at least one or of each cavity (26a, 26b, 26c) corresponding to a cutting area (22), a cutting face (24a, 24b, 24c) of which comes into contact with the workpiece (1).

8. The broaching machine (40) according to one of claims 6 or 7, wherein the lubrication distributor (44) comprises at least one seal (46).

9. A method for machining a workpiece (1) by means of a broaching machine (40) according to any of claims 5 to 8, the broaching machine (40) comprising a frame, one of the broaching tool (20) and said workpiece (1) being fixed relative to the frame, the method comprising the steps of:
- translating the other of the broaching tool (20) and the workpiece (1) relative to the frame so that at least one cutting face (24a, 24b, 24c) comes into contact with the workpiece (1),
- lubricating, by means of the lubrication system (41), the at least one cavity (26a, 26b, 26c) corresponding to the cutting area (22) for which the cutting face (24a, 24b, 24c) comes into contact with the workpiece (1),
- stopping the lubrication of the at least one cavity (26a, 26b, 26c) corresponding to said cutting area as soon as the cutting face (24a, 24b, 24c) ceases to be in contact with the workpiece (1).
